# FASCICULE DE BREVET EUROPEEN

(11) **EP 2 512 008 B1**
(45) Date de publication et mention de la délivrance du brevet: **22.11.2017**
(21) Numéro de dépôt: 11305456.3
(22) Date de dépôt: 15.04.2011
(51) Int. Cl.: H02K 5/22

(54) **Ensemble comprenant un stator et une boite a borne pour l'alimentation electrique du stator**
Baugruppe, die einen Stator und ein Klemmengehäuse zur Stromversorgung des Stators umfasst
Unit including a stator and a terminal box for supplying electricity to the stator

(43) Date de publication de la demande: 17.10.2012
(73) Titulaire: Wilo Salmson France, 78400 Chatou (FR)
(72) Inventeur: Bouilly, Hervé, 53940 LE GENEST ST ISLE (FR); Leze, Adrien, 53000 LAVAL (FR)
(74) Mandataire: Hirsch & Associés

(56) Documents cités:
- EP-A1- 1 955 927
- WO-A1-02/087057
- DE-A1-102004 062 816
- DE-B- 1 142 949
- DE-U1-202004 010 513

## Description

La présente invention concerne un ensemble comprenant un stator et une boîte à borne pour l'alimentation électrique du stator.

Un stator comprend généralement un passage central autour duquel est disposé un ensemble de supports de bobine. L'ensemble est typiquement positionné dans une carcasse et le stator présente alors une forme générale cylindrique. On forme un moteur en plaçant un rotor dans le passage central et en alimentant les bobines en courant électrique pour créer un champ magnétique apte à faire tourner le rotor. Pour alimenter les bobines, des lames de contact électrique sont positionnées au niveau d'une extrémité du stator et forment ainsi une interface d'alimentation électrique du stator. Une boîte à borne (i.e. un boîtier de commande typiquement équipé d'un circuit imprimé) peut alors se connecter à l'extrémité du stator où sont positionnées les lames grâce à des moyens de fixation. La boîte à borne est alors en outre reliée électriquement aux lames de façon à alimenter le stator grâce à des pinces de contact électrique dans lesquelles les lames s'enfichent.

Les lames de contact électrique sont généralement alignées. Par conséquent, les pinces de contact de la boîte à borne sont également alignées. Les moyens de fixation sont idéalement tels que les pinces de contact se trouvent bien en vis-à-vis des lames lorsque la boîte à borne est connectée au stator. Cependant, les procédés de connexion et d'industrialisation du stator avec la boîte à borne généralement utilisés sont tels que les lames peuvent être légèrement décalées angulairement par rapport aux pinces. En d'autres termes, les lames ne s'enfichent pas dans les pinces sans être grandement dégradées, et parfois ne s'enfichent plus du tout.

Les documents DE 20 2004 010513 U1 et EP 1 955 927 A1 décrivent des électromoteurs. Le document DE 10 2004 062816 A1 décrit un stator. En particulier, le document DE 20 2004 010513 U1 divulgue un ensemble comprenant les caractéristiques du préambule de la revendication 1.

Un but de la présente invention est de limiter les conséquences d'un éventuel décalage introduit lors de la connexion entre un stator et une boîte à borne.

A cette fin, la présente invention propose un ensemble selon la revendication 1 et un ensemble selon la revendication 2.

Selon une variante, l'arc de cercle est centré sur l'axe longitudinal.

Selon une variante, les branches des pinces sont sollicitées élastiquement l'une vers l'autre.

Selon une variante, les branches sont de section transversalement à l'axe longitudinal sensiblement rectangulaire et présentent des faces en regard selon leur plus grande dimension tangentes à l'arc de cercle.

Selon une variante, les lames sont dans des logements parallèles.

Selon une variante, les lames comprennent une surface de contact sensiblement parallèle à la tangente à l'arc de cercle au niveau des lames.

Selon une variante, la surface de contact est obtenue par frappe d'une forme initialement parallélépipédique.

Selon une variante, la boîte à borne comporte une ouverture entourée d'un barillet épousant la forme du pourtour de la lumière de la carcasse.

Selon une variante, le barillet pénètre dans la carcasse par la lumière, les lames étant en contact avec les pinces dans le barillet.

Selon une variante, l'ensemble comprend en outre un rotor dans un passage central du stator, le rotor étant mobile en rotation autour d'un axe longitudinal du passage central, les arcs de cercle étant centrés sur l'axe longitudinal.

D'autres caractéristiques et avantages de l'invention apparaîtront à la lecture de la description qui suit d'un mode de réalisation préféré de l'invention, donnée à titre d'exemple et en référence au dessin annexé qui montrent :
- La figure 1, un stator ;
- La figure 2, un détail du stator de la figure 1 ;
- La figure 3, une perspective éclatée du stator et d'une carcasse ;
- La figure 4, une vue de droite de la figure 3 ;
- La figure 5, un détail du stator avec des pinces d'alimentation du stator ;
- La figure 6, un détail de la figure 5 ;
- La figure 7, une lame de contact électrique du stator ;
- La figure 8, une pince de contact électrique ;
- La figure 9, une vue du stator avec les pinces de contact électrique ;
- Figure 10, une vue en coupe d'un ensemble de stator et boîte à borne.

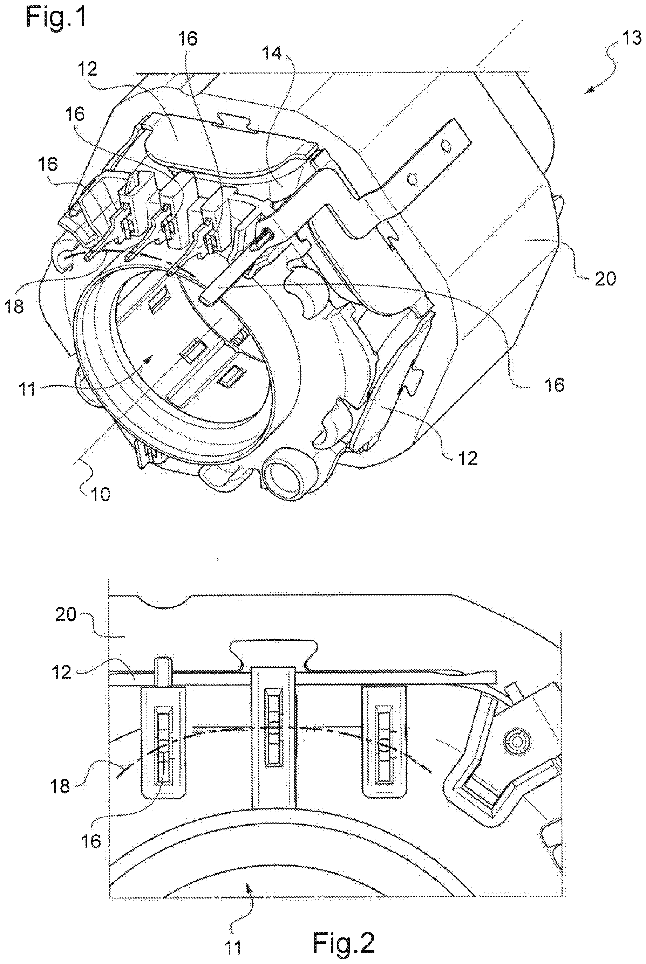

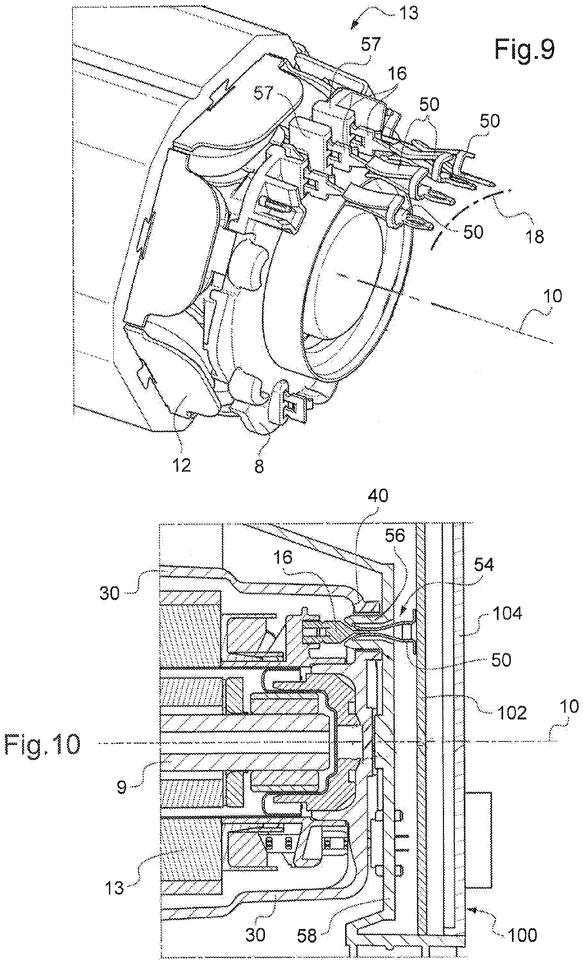

La figure 1 présente un exemple de stator 13. Le stator fait partie d'un moteur comprenant en outre un rotor 9 comme cela est visible sur la figure 10. Le stator 13 comprend un passage central 11 le long d'un axe longitudinal 10 de supports de bobine 12 disposés autour du passage central 11. Le stator 13 comprend également des lames 16 de contact électrique positionnées sur un arc de cercle 18 autour du passage central 11. Les lames 16 forment une interface d'alimentation électrique du stator. Le stator 13 est adapté à être connecté à une boîte à borne présentant des pinces de contact électrique positionnées sur un même arc de cercle, et ce malgré la présence éventuelle d'un léger décalage angulaire entre les lames 16 du stator 13 et les pinces de la boîte à borne. Les lames 16 et les pinces de la boîte à borne sont sur un arc de cercle sensiblement de même rayon et de même centre.

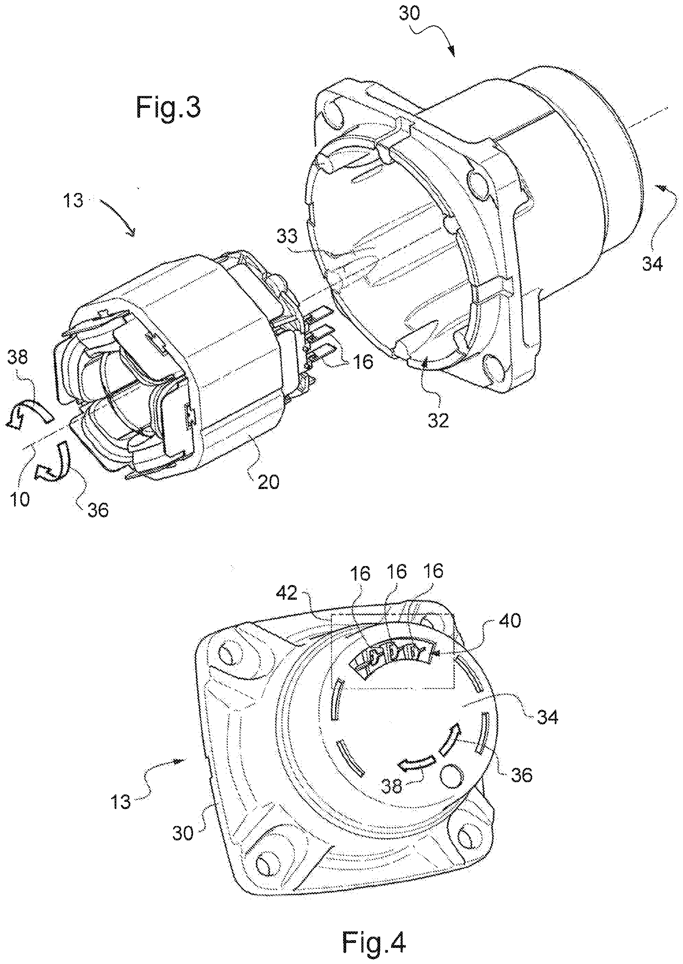

Comme on peut le voir sur la figure 2 qui présente le stator 13 en coupe transversale par rapport à l'axe longitudinal 10, les lames 16 sont positionnées sur l'arc de cercle 18 autour du passage central 11. En d'autres termes, les lames 16 sont disposées sur un arc de cercle 18 lorsque l'on prend une coupe transversale du stator 13 (i.e. une coupe orthogonale à l'axe 10). La position des lames 16 sur l'arc de cercle 18 permet une meilleure connexion entre le stator 13 et une boîte à borne adaptée à se connecter au stator 13. Une explication est fournie ci-dessous en référence aux figures 3-6.

En référence à la figure 3, le stator 13 peut être monté dans une carcasse 30. La carcasse 30 protège le moteur. Le montage peut se faire par glissement du stator 13 dans une ouverture 32 de la carcasse 30 qui comprend également un fond 34 en son autre extrémité. Typiquement, des guides 33 sont prévus pour faciliter le glissement. Cependant, le stator 13 peut être glissé à l'intérieur de la carcasse 30 avec un écart angulaire par rapport à la position souhaitée. Il y a donc un jeu en rotation suivant l'une des flèches 36 ou 38 lors du montage. Cet écart peut atteindre typiquement 2 à 3°.

La figure 4 présente une vue du fond 34 de la carcasse 30 après que le stator 13 a été monté dans la carcasse 30. Une lumière 40, avec une forme selon l'arc de cercle 18, est prévue dans le fond 34 afin de fournir un passage pour enficher les lames 16 dans les pinces d'une boîte à borne 100 visible sur la figure 10. Ainsi, une boîte à borne peut se connecter au stator 13, le fond 34 de la carcasse s'intercalant entre le stator 13 et la boîte à borne. De même que le stator 13 peut être monté dans la carcasse 30 avec un écart angulaire par rapport à la position souhaitée suivant les flèches 36 ou 38, la boîte à borne peut également être montée sur le fond 34 avec un écart angulaire suivant les mêmes flèches 36 ou 38, indépendamment de l'écart existant pour le stator 13. Un tel cumul de l'écart angulaire du stator et de celui de la boîte à borne complique l'enfichage des lames 16 dans les pinces de la boîte à borne.

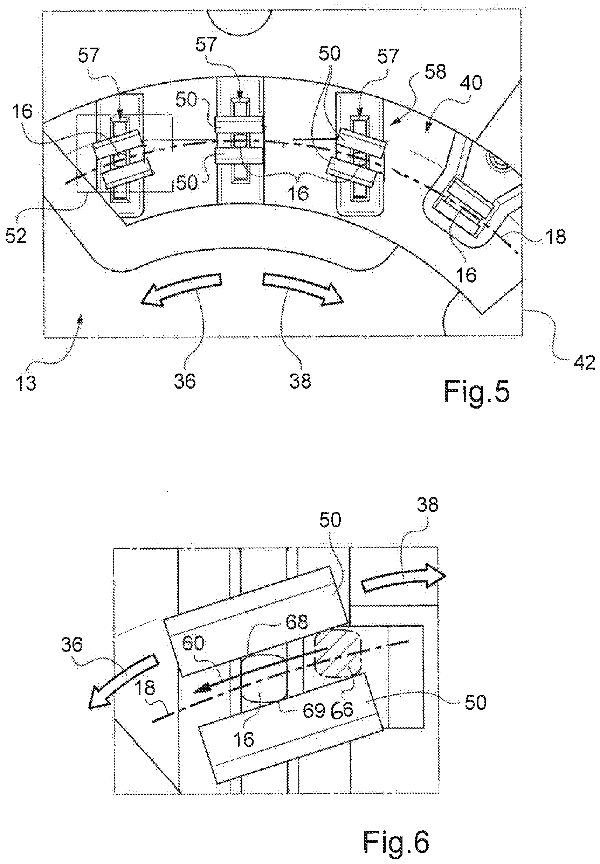

La solution proposée pour diminuer le risque de non connexion dû à un écart angulaire ou à un cumul d'écarts est expliquée en référence aux figures 5 et 6. La figure 5 présente une vue de détail du cadre 42 de la figure 4, lequel est centré sur la lumière 40. La figure 5 montre le stator 13 en coupe transversale par rapport à l'axe 10 avec par dessus des pinces 50 de contact électrique de la boîte à borne dans lequel les lames 16 sont prêtes à être enfichées, le reste de la boîte à borne n'étant pas représenté. La figure 6 montre une vue de détail du cadre 52 de la figure 5, focalisé sur l'une des lames 16 et pinces 50. Sur les figures 5 et 6, les lames 16 et les pinces 50 sont bien positionnées et l'enfichage peut ainsi être correctement réalisé. En d'autres termes, il n'y a pas eu d'écart angulaire lors du montage. Cependant, on voit également sur les figures les flèches 36 et 38 suivant lesquelles un écart angulaire peut être introduit. Par exemple, si un écart angulaire est introduit suivant la flèche 38, on obtiendrait par exemple la configuration représentée par la zone de hachures 66 sur la figure 6. Comme les lames 16 du stator sont positionnées sur l'arc de cercle 18, même avec un tel écart angulaire, il y aurait contact électrique. L'enfichage pourrait donc toujours se faire. Le positionnement des lames 16 sur l'arc de cercle 18 permet d'obtenir une zone de tolérance 60, qui correspond à la portion de l'arc de cercle chevauchée par la plus grand dimension des pinces, le long de laquelle la lame 16 peut être déplacée (par l'introduction de l'écart angulaire lors du montage). Ainsi, le positionnement des lames 16 sur l'arc de cercle 18 permet d'obtenir un bon enfichage même en cas d'écart angulaire lors du montage du stator 13 et/ou du montage de la boîte à borne. Le positionnement des lames 16 sur l'arc de cercle 18 permet donc de connecter le stator plus simplement à une boîte à borne dont les pinces 50 seraient le long d'un arc de cercle de même rayon. En effet, grâce à la zone de tolérance 60, un écart angulaire n'est pas problématique. Les pinces sont conçues pour accepter cette tolérance 60 de connexion.

De préférence mais non obligatoirement, les lames 16 s'étendent dans la direction de l'axe 10. Cela permet une connexion plus simple du stator avec une boîte à borne. Dans ce cas, la géométrie est telle que les lames sont positionnées sur un cylindre s'étendant dans la direction de l'axe 10.

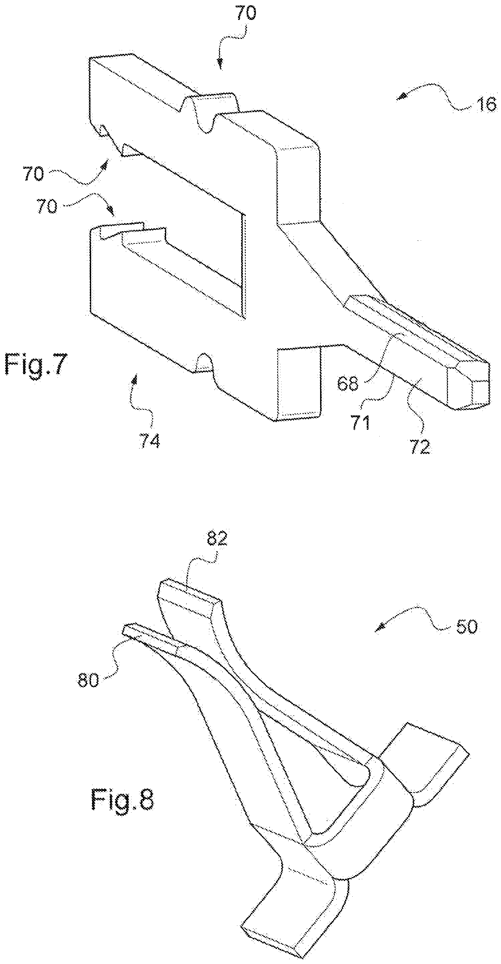

Les supports de bobine 12 disposés autour du passage central 11 assurent la fonction stator. En effet, un rotor peut être logé dans le passage central 11, et être mis en rotation autour de l'axe 10 par alimentation électrique de bobines supportées par les supports 12. Dans le but de cette alimentation électrique, le stator comprend les lames de contact 16. En référence à la figure 7, les lames de contact 16 peuvent être tout organe de conduction électrique comprenant des moyens de fixation 70 au stator, des moyens de liaison électrique 72 avec une boîte à borne, et des moyens de transmission 74 de l'électricité à des bobines ou à une masse du stator. Ces lames peuvent donc être en matériau conducteur, par exemple métallique. Il peut s'agir d'alliage cuivreux tel que le CuSn0,15 qui assure de meilleures performances. Les lames 16 peuvent également être post-étamées, ce qui permet d'assurer une protection contre la corrosion, d'offrir une bonne conductibilité électrique et d'améliorer la soudabilité des lames 16 ainsi que la bonne connexion électrique avec les pinces 50.

Les lames 16 peuvent être parallèles. Cela signifie que les lames 16 sont translatées l'une par rapport à l'autre. Les lames 16 sont introduites dans des logements 57 de la figure 5 ou 9. Dans le plan de la figure 5, les logements 57 sont longitudinaux et s'étendent selon des directions parallèles entre elles. Les lames 16 sont donc introduites dans les logements 57 selon des plans parallèles entre eux. Cela permet de simplifier la fabrication du stator 13. Dans ce cas, en référence aux figures 6 à 8, les lames peuvent comprendre une surface de contact 68 sensiblement parallèle à une tangente à l'arc de cercle au niveau de la au moins une lame 16. Cela permet un contact surfacique entre la lame 16 et au moins une branche 80, 82 de la pince 50 lors de l'enfichage, et on améliore ainsi la conduction. Une telle lame 16 peut alors comprendre en outre une autre surface de contact 69 sensiblement parallèle à la tangente à l'arc de cercle au niveau de la lame. On améliore ainsi la conductivité. Les lames 16 ont la forme de tige, permettant un bon contact avec les branches 80, 82. Les lames 16 peuvent même être des tiges à section transversale circulaires.

De telles surfaces de contact peuvent être obtenues par chanfreinage d'une forme initialement parallélépipédique. Par exemple, on peut mettre sous pression les arêtes de la forme initialement parallélépipédique et ainsi obtenir une forme octogonale telle que celle de la figure 7. Typiquement, le chanfrein est tel que la surface 68 se présente parallèle aux branches 80 et 82 des pinces 50. Une version simplifiée consiste à proposer une tige complètement cylindrique de la lame 16.

Une boîte à borne adaptée à se fixer au stator 13 pour l'alimentation électrique du stator 13 comprend typiquement des pinces 50 de contact électrique, dont une représentation est sur la figure 8. Ces pinces sont positionnées sur un arc de cercle, afin de coopérer avec les lames 16 du stator 13, comme cela a été décrit précédemment. Une telle boîte à borne offre donc une tolérance angulaire lors du montage, ce qui abaisse le coût du montage. La boîte à borne comprend un circuit imprimé et a pour fonction de contrôler le moteur.

Comme représenté sur la figure 8, au moins une pince 50 peut comprendre deux branches 80 et 82 sollicitées élastiquement l'une vers l'autre. Cela permet d'obtenir un contact électrique entre branches et lame. En outre, ceci permet également de compenser un écart de positionnement entre les pinces 50 et les lames 16, essentiellement radialement par rapport à l'arc de cercle 18. Les branches 80 et 82 peuvent être de section sensiblement rectangulaire et présenter des faces en regard selon leur plus grande dimension (i.e. la dimension suivant laquelle les branches s'étendent). Les faces en regard selon la plus grande dimension peuvent être tangentes à l'arc de cercle. Précisément, les faces d'une pince sont alors parallèles à une tangente à l'arc de cercle au niveau de la pince. Cela augmente la taille de la zone de tolérance 60.

Un ensemble comprenant un stator 13 ayant des lames 16 de contact électrique positionnées sur un arc de cercle 18 et une boîte à borne comprenant des pinces 50 de contact électrique positionnées sur un arc de cercle de même rayon et de même centre est adapté à recevoir un rotor et former un moteur en état de fonctionner. En outre, un tel ensemble peut être monté avec un procédé de montage plus simple. Comme discuté plus haut, le positionnement des lames 16 sur l'arc de cercle 18 et le positionnement des pinces sur un arc de cercle de même rayon compense un éventuel décalage angulaire introduit lors du procédé de montage et de rendre la connexion impossible.

La figure 9 montre une vue du stator 13 avec les pinces 50 de contact électrique. Le stator 13 comporte une coupelle 8 qui coiffe les supports de bobine 12. La coupelle porte les logements 57 et les lames 16. Après montage, comme on le voit sur la figure 9, les lames 16 du stator 13 sont typiquement enfichées dans les pinces 50 de la boîte à borne (dont le reste n'est pas représenté), la boîte à bornes alimentant alors le stator 13 électriquement. Les lames 16 et les pinces 50 sont de préférence disposées selon le même arc de cercle 18. Les pinces 50 et lames 16 sont alors positionnés respectivement sur des arcs de cercle centrés le long de l'axe longitudinal 10 et de même rayon. Sur la figure 9, les arcs de cercle sont confondus dans l'arc de cercle 18 et sont donc les mêmes. Tout écart angulaire entre les pinces 50 et les lames 16 est corrigé ou compensé par la disposition des lames 16 et pinces 50 sur l'arc de cercle 18.

L'axe longitudinal 10 est typiquement porté par le stator 13 comme on le voit sur la figure 10 qui présente une vue en coupe de l'ensemble une fois tous les montages réalisés. La carcasse 30 et la boîte à borne sont assemblés selon cet axe 10. Tout écart angulaire entre les pinces 50 et les lames 16 est corrigé ou compensé par la disposition des lames 16 et pinces 50 sur l'arc de cercle 18.

Les lames 16 et pinces 50 peuvent être disposées selon des arcs de cercles centrés sur le même axe, mais, pour des raisons de montage ou de construction, avec des rayons légèrement différents. L'élasticité des branches 80, 82 des pinces 50 permet de compenser la différence de rayons.

La figure 10 montre une vue en coupe d'un ensemble de stator 13 et boîte à borne 100. La boîte à borne 100 comporte notamment un circuit de contrôle 102 (ou « PCB » pour « Printed Circuit Board ») pour contrôler le fonctionnement du moteur, le circuit 102 étant logé dans un boîtier 10. Un barillet 56 est en saillie de la face du boîtier 104 en regard du stator 13 et de la carcasse 30. Le barillet 56 peut être en un seul bloc (continu avec toutes les connexions), mais il peut être aussi discontinu (composé de plusieurs blocs avec une ou plusieurs connexions par portion de barillet mais restant selon un arc de cercle et, voire même, répartis sur 360°).

Selon la figure 10, le stator 13 est dans la carcasse 30 sur laquelle est fixée la boîte à borne 100, les lames 16 étant dans la carcasse 30 et les pinces 50 traversant une lumière 40 de la carcasse 30 pour établir le contact électrique avec les lames 16. Les lames 16 ne ressortent pas de la carcasse 30 et sont ainsi mieux protégées de toute dégradation. En effet, les lames 16 peuvent être fines (i.e. au moins une dimension transversale typiquement inférieure à 10% de la dimension longitudinale) et sont ainsi fragiles. Le fait que les lames 16 soient constamment protégées (en l'occurrence par la carcasse 30) permet ainsi d'éviter leur dégradation. En effet, le stator 13 est typiquement monté dans la carcasse 30 en usine, tandis que le sous-ensemble comprenant le stator 13 et la carcasse 30 n'est assemblé avec la boîte à borne 100 que lors de l'installation finale. Alternativement, l'assemblage inverse est possible : la boîte à borne 100 est assemblé à la carcasse puis le stator est monté dans la carcasse.

La boîte à borne 100 peut comporter une ouverture 54 entourée du barillet 56 épousant la forme du pourtour de la lumière 40 de la carcasse. Ceci permet un bon positionnement relatif de la boîte à borne 100 et de carcasse 30. Le barillet 56 peut donc avoir la même forme d'arc de cercle que la lumière 40. Le barillet est en saillie d'une face 58 de la boîte à borne 100 en regard de la carcasse 30. Les pinces 50 sont en saillie de la boîte à borne 100 dans le barillet 56. Le barillet 56 assure une protection contre les pinces 50 dans l'hypothèse où la boîte à borne 100 est connectée au secteur, mais n'est pas branchée au stator 13. Le barillet 56 prévient les risques d'électrocution.

Une fois la boîte à borne 100 fixée à la carcasse 30, le barillet 56 pénètre dans la carcasse 30 par la lumière 40, les lames 16 étant en contact avec les pinces 50 dans le barillet 56. Le barillet 56 et les pinces 50 s'avancent dans la carcasse 30 pour établir le contact avec les lames 16.

L'invention permet de garantir une bonne connexion des lames 16 sur les pinces 50, tout en acceptant des dispersions angulaires importantes que l'on peut trouver dans l'assemblage successif de pièces partageant le même axe 10, à savoir notamment le stator 13, la carcasse 30, la boîte à borne 100 et la carte de contrôle 102.

La disposition des lames 16 et des pinces 50 en arc de cercle permet de compenser un éventuel décalage angulaire des lames 16 et pinces 50.

En fonctionnement moteur, l'ensemble comprend en outre, comme déjà mentionné plus haut, un rotor 9 dans le passage central 11 du stator 13, le rotor 9 étant mobile en rotation autour d'un axe longitudinal 10 du passage central 11, les arcs de cercle étant centrés sur l'axe longitudinal 10.

Bien entendu, la présente invention n'est pas limitée aux exemples décrits et représentés, mais elle est susceptible de nombreuses variantes accessibles à l'homme de l'art.

En outre, les lames 16 ont été décrites ci-dessus comme étant portées par le stator 13. Les lames 16 peuvent être alternativement portées par la boîte à borne et viendraient établir le contact avec les pinces portées par le stator dans la carcasse.

## Revendications

1. Un ensemble comprenant un stator (13), le stator (13)
- comprenant un passage central le long d'un axe (10) longitudinal d'un ensemble de supports de bobine (12) disposés autour du passage central, et
- portant des lames (16) de contact électrique, lesdites lames formant une interface d'alimentation électrique du stator, lesdites lames étant positionnées sur un arc de cercle (18) autour du passage central,
l'ensemble comprenant en outre une boîte à borne (100) connectée au stator pour l'alimentation électrique du stator, la boîte (100) comprenant des pinces (50) de contact électrique, les pinces (50) étant positionnées sur ledit arc de cercle et comprenant deux branches (80, 82) tangentes à l'arc de cercle,
l'ensemble étant **caractérisé en ce que**
- le stator (13) est monté dans une carcasse (30),
- la boîte à borne est montée sur un fond (34) de la carcasse (30), le fond de ladite carcasse s'intercalant entre le stator (13) et la boîte à borne (100),
- les pinces (50) sont en contact avec les lames (16) au travers d'une lumière (40) de la carcasse (30), ladite lumière (40) s'étendant selon ledit arc de cercle.

2. Un ensemble comprenant un stator (13), le stator (13)
- comprenant un passage central le long d'un axe (10) longitudinal d'un ensemble de supports de bobine (12) disposés autour du passage central, et
- portant des pinces (50) de contact électrique, les pinces formant une interface d'alimentation électrique du stator, lesdites pinces étant positionnées sur un arc de cercle (18) autour du passage central, lesdites pinces comprenant deux branches (80, 82) tangentes à l'arc de cercle,
l'ensemble comprenant en outre une boîte à borne (100) connectée au stator pour l'alimentation électrique du stator, la boîte (100) comprenant des lames (16) de contact électrique, les lames (16) étant positionnées sur ledit arc de cercle,
l'ensemble étant **caractérisé en ce que**
- le stator (13) est monté dans une carcasse (30),
- la boîte à borne est montée sur un fond (34) de la carcasse (30), le fond de ladite carcasse s'intercalant entre le stator (13) et la boîte à borne (100),
- les lames (16) sont en contact avec les pinces (50) au travers d'une lumière (40) de la carcasse (30), ladite lumière (40) s'étendant selon ledit arc de cercle.

3. L'ensemble selon l'une des revendications 1 ou 2, dans lequel l'arc de cercle est centré sur l'axe longitudinal.

4. L'ensemble selon l'une des revendications 1 à 3, dans lequel les branches (80, 82) des pinces (50) sont sollicitées élastiquement l'une vers l'autre.

5. L'ensemble selon la revendication 4, dans lequel les branches (80, 82) sont de section transversalement à l'axe longitudinal sensiblement rectangulaire et présentent des faces en regard selon leur plus grande dimension tangentes à l'arc de cercle.

6. L'ensemble selon l'une des revendications 1 à 5, dans lequel les lames sont dans des logements (57) parallèles.

7. L'ensemble selon l'une des revendications 1 à 6, dans lequel les lames (16) comprennent une surface de contact sensiblement parallèle à la tangente à l'arc de cercle au niveau des lames.

8. L'ensemble selon la revendication 7, dans lequel la surface de contact est obtenue par frappe d'une forme initialement parallélépipédique.

9. L'ensemble selon l'une des revendications 1 à 8, dans lequel la boîte à borne (100) comporte une ouverture (54) entourée d'un barillet (56) épousant la forme du pourtour de la lumière (40) de la carcasse (30).

10. L'ensemble selon la revendication 9, dans lequel le barillet (56) pénètre dans la carcasse (30) par la lumière (40), les lames (16) étant en contact avec les pinces (50) dans le barillet (56).

11. L'ensemble selon l'une des revendications 1 à 10, comprenant en outre un rotor (9) dans un passage central (11) du stator, le rotor étant mobile en rotation autour d'un axe longitudinal du passage central, les arcs de cercle étant centrés sur l'axe longitudinal.

## Patentansprüche

1. Eine Baugruppe umfassend einen Stator (13), wobei der Stator (13)
- einen mittleren Durchgang, entlang einer Längsachse (10) einer, um den mittleren Durchgang herum angeordneten Gruppe von Spulenhaltern (12) umfasst, und
- elektrische Kontaktlamellen (16) aufweist, wobei die Lamellen eine elektrische Versorgungsschnittstelle bilden, und wobei die Lamellen auf einem Kreisbogen (18) um den mittleren Durchgang herum angeordnet sind,
wobei die Baugruppe außerdem einen Anschlusskasten (100) umfasst der für die Stromversorgung des Stators mit dem Stator verbunden ist, wobei der Anschlusskasten (100) elektrische Kontaktklammern (50) umfasst, und wobei die Klammern (50) auf dem Kreisbogen angebracht sind und zwei Schenkel (80, 82) umfassen, die tangential zu dem Kreisbogen angeordnet sind,
wobei die Baugruppe **dadurch gekennzeichnet ist, dass**
- der Stator (13) in einem Gehäuse (30) angebracht ist,
- der Anschlusskasten an einer Rückwand (34) des Gehäuses (30) angebracht ist, wobei die Rückwand des Gehäuses sich zwischen dem Stator (13) und dem Anschlusskasten (100) einfügt,
- die Klammern (50) mit den Lamellen (16) durch ein Lumen (40) des Gehäuses (30) in Kontakt stehen, wobei das Lumen (40) sich dem Kreisbogen nach erstreckt.

2. Eine Baugruppe umfassend einen Stator (13), wobei der Stator (13)
- einen mittleren Durchgang entlang einer Längsachse (10) einer, um den mittleren Durchgang herum angeordneten Gruppe von Spulenhaltern (12) umfasst, und
- elektrische Kontaktklammern (50) aufweist, wobei die Klammern eine elektrische Versorgungsschnittstelle bilden, wobei die Klammern auf einem Kreisbogen (18), um den mittleren Durchgang herum angeordnet sind, und wobei die Klammern zwei Schenkel (80, 82) umfassen, die tangential zu dem Kreisbogen angeordnet sind,
wobei die Baugruppe außerdem einen Anschlusskasten (100) umfasst, der für die Stromversorgung des Stators mit dem Stator verbunden ist, wobei der Anschlusskasten (100) elektrische Kontaktlamellen (16) umfasst, und wobei die Lamellen (16) auf dem Kreisbogen angeordnet sind,
wobei die Baugruppe **dadurch gekennzeichnet ist, dass**
- der Stator (13) in einem Gehäuse (30) angebracht ist,
- der Anschlusskasten an einer Rückwand (34) des Gehäuses (30) angebracht ist, wobei die Rückwand des Gehäuses sich zwischen dem Stator (13) und dem Anschlusskasten (100) einfügt,
- die Lamellen (16) mit den Klammern (50) durch ein Lumen (40) des Gehäuses (30) in Kontakt stehen, wobei das Lumen (40) sich dem Kreisbogen nach erstreckt.

3. Die Baugruppe nach einem der Ansprüche 1 oder 2, wobei der Kreisbogen auf der Längsachse zentriert ist.

4. Die Baugruppe nach einem der Ansprüche 1 bis 3, wobei die Schenkel (80, 82) der Klammern (50) zueinander hin federbelastet sind.

5. Die Baugruppe nach Anspruch 4, wobei die Schenkel (80, 82) einen, quer zur Längsachse liegenden, im Wesentlichen rechteckigen, Querschnitt und einander gegenüberliegende Flächen aufweisen, die nach deren größter Abmessung tangential zu dem Kreisbogen angeordnet sind.

6. Die Baugruppe nach einem der Ansprüche 1 bis 5, wobei die Lamellen in parallel liegenden Aufnahmen (57) angeordnet sind.

7. Die Baugruppe nach einem der Ansprüche 1 bis 6, wobei die Lamellen (16) eine, im Wesentlichen parallel zur Tangente am Kreisbogen liegende, Kontaktfläche im Bereich der Lamellen umfassen.

8. Die Baugruppe nach Anspruch 7, wobei die Kontaktfläche durch das Prägen einer anfänglich quaderförmigen Form erhalten wird.

9. Die Baugruppe nach einem der Ansprüche 1 bis 8, wobei der Anschlusskasten (100) eine Öffnung (54) aufweist, der von einem Zylinder (56) umgeben ist, welcher an die Form des Umfangsrands des Lumen (40) des Gehäuses (30) angepasst ist.

10. Die Baugruppe nach Anspruch 9, wobei der Zylinder (56) durch das Lumen (40) in das Gehäuse (30) eindringt, und wobei die Lamellen (16) mit den Klammern (50) in dem Zylinder (56) in Kontakt stehen.

11. Die Baugruppe nach einem der Ansprüche 1 bis 10, die außerdem einen Rotor (9) in einem mittleren Durchgang (11) des Stators umfasst, wobei der Rotor um eine Längsachse des mittleren Durchgangs drehbeweglich ist, und wobei die Kreisbogen auf der Längsachse zentriert sind.

## Claims

1. An assembly comprising a stator (13), the stator (13)
- comprising a central passage along a longitudinal axis (10) of a set of coil supports (12) disposed around the central passage, and
- carrying electrical contact blade-like members (16), said blade-like members forming an electrical power supply interface for the stator, said blade-like members being positioned on an arc of a circle (18) around the central passage,
the assembly further comprising a terminal box (100) connected to the stator for supplying the stator with electrical energy, the terminal box (100) comprising electrical contact clamping members (50), the clamping members (50) being positioned on said arc of a circle and comprising two branches (80, 82) tangential to said arc of a circle,
the assembly being **characterized in that**
- the stator (13) is mounted in a frame (30),
- the terminal box is mounted on a base (34) of the frame (30), the base of said frame being interposed between the stator (13) and the terminal box (100),
- the clamping members (50) are in contact with the blade-like members through a lumen (40) of said frame (30), said lumen (40) extending along the said arc of a circle.

2. An assembly comprising a stator (13), the stator (13)
- comprising a central passage along a longitudinal axis (10) of a set of coil supports (12) disposed around the central passage, and
- comprising electrical contact clamping members (50), said clamping members forming an electrical power supply interface for the stator, said clamping members being positioned on an arc of a circle (18) around the central passage, said clamping members comprising two branches (80, 82) tangential to the arc of a circle,
the assembly further comprising a terminal box (100) connected to the stator for supplying the stator with electrical energy, the terminal box (100) comprising electrical contact blade-like members (16), the blade-like members (16) being positioned on said arc of a circle,
the assembly being **characterized in that**
- the stator (13) is mounted in a frame (30),
- the terminal box is mounted on a base (34) of the frame (30), the bottom of said frame being interposed between the stator (13) and the terminal box (100)
- the blade-like members (16) are in contact with the clamping members (50) through a lumen (40) of the frame (30), said lumen (40) extending along the said arc of a circle.

3. The assembly according to one of claims 1 or 2, wherein the arc of a circle is centered on the longitudinal axis.

4. The assembly according to one of claims 1 to 3, in which the branches (80, 82) of the clamping members (50) are resiliently urged towards each other.

5. The assembly according to claim 4, wherein the branches (80, 82) have a cross-section transverse to the substantially rectangular longitudinal axis and have opposing faces at their largest dimension tangential to the arc of a circle.

6. The assembly according to any one of claims 1 to 5, in which the blade-like members are housed in parallel housings (57).

7. The assembly according to one of claims 1 to 6, wherein the blade-like members (16) have a contact surface substantially parallel to the tangent to the arc of a circle at the level of the blade-like members.

8. The assembly according to claim 7, wherein the contact surface is obtained by stamping an initially parallelepiped shape.

9. The assembly according to any one of claims 1 to 8, wherein the terminal box (100) includes an opening (54) surrounded by a small barrel-like member (56) closely following the shape of the periphery of the lumen (40) of the frame (30).

10. The assembly according to claim 9, wherein the small barrel-like member (56) penetrates into the frame via the lumen (40, the blade-like members (16) being in contact with the clamping members (50) inside the small barrel-like member (56).

11. The assembly according to one of claims 1 to 10, further comprising a rotor (9) in a central passage (11) of the stator, the rotor being rotatable about a longitudinal axis of the central passage, the arcs of a circle being centered on the longitudinal axis.
